# EUROPÄISCHE PATENTSCHRIFT

(11) **EP 3 208 010 B1**
(45) Veröffentlichungstag und Bekanntmachung des Hinweises auf die Patenterteilung: **01.08.2018**
(21) Anmeldenummer: 16156538.7
(22) Anmeldetag: 19.02.2016
(51) Int. Cl.: B21H 3/04

(54) **TANGENTIALGEWINDEROLLKOPF**
TANGENTIAL THREAD ROLLING HEAD
TETE DE ROULAGE TANGENTIELLE

(43) Veröffentlichungstag der Anmeldung: 23.08.2017
(73) Patentinhaber: LMT Fette Werkzeugtechnik GmbH & Co. KG, 21493 Schwarzenbek (DE)
(72) Erfinder: Janke, Stefan, 23881 Koberg (DE); Lienau, Raphael, 22111 Hamburg (DE); Beben, Adam, 21031 Hamburg (DE); Gutsche, Christian, 21035 Hamburg (DE)
(74) Vertreter: Hauck Patentanwaltspartnerschaft mbB

(56) Entgegenhaltungen:
- EP-B1- 0 811 443
- DE-A1- 1 477 040
- DE-B- 1 012 893
- DE-B3-102004 006 125
- GB-A- 915 957
- US-A- 2 974 550

## Beschreibung

Die Erfindung betrifft einen Tangentialgewinderollkopf umfassend zwei gabelförmige Rollkopfarme, in denen jeweils eine Gewinderolle auf einer Achse drehbar gelagert ist, wobei die Gewinderollen jeweils mit einem auf einer der Achsen sitzenden Ritzel eines die Gewinderollen koppelnden Getriebes in Eingriff stehen, wobei die Gewinderollen vor dem Einbau der Achsen seitlich in eine Montageposition in die Rollkopfarme einschiebbar sind, in welcher jeweils eine der Achsen in eine Lagerbohrung der Gewinderollen eingeschoben werden kann, wobei die Gewinderollen und die Ritzel zusammenwirkende Klauen besitzen, wobei die Klauen der Gewinderollen und der Ritzel so ausgebildet sind, dass die Gewinderollen jeweils nur in einer einzigen definierten Drehlage seitlich in die Montageposition eingeschoben werden können.

Ein solcher Tangentialgewinderollkopf ist bekannt aus EP 0 811 443 B1. Dieser Tangentialgewinderollkopf hat den Vorteil, dass durch geeignete Ausbildung der zusammenwirkenden Klauen von Gewinderollen und Ritzeln sichergestellt ist, dass die Gewinderollen jeweils nur in einer einzigen definierten Drehlage in die Rollkopfarme eingebaut werden können. Damit ist die ordnungsgemäße Funktion des Tangentialgewinderollkopfes sichergestellt. Der aus EP 0 811 443 B1 bekannte Tangentialgewinderollkopf kann insbesondere zueinander verschwenkbare Rollkopfarme besitzen. Es sind andererseits auch Tangentialgewinderollköpfe mit feststehenden, also nicht zueinander verschwenkbaren Rollkopfarmen bekannt. Beispielsweise zeigt die SU 654338 A1 einen solchen Tangentialgewinderollkopf.

Bei dem vorgenannten Tangentialgewinderollkopf ist zwar sichergestellt, dass die Gewinderollen jeweils nur in einer einzigen definierten Drehlage in den Rollkopfarm eingesetzt werden können. Allerdings kann jede Gewinderolle in beide Rollkopfarme eingesetzt werden. Für den Betrieb des Tangentialgewinderollkopfes ist entscheidend, dass jede Gewinderolle in den ihr zugeordneten Rollkopfarm eingesetzt wird, da es anderenfalls zu einem Funktionsausfall kommen kann. So sind die Gewinderollen bekanntlich unterschiedlich ausgebildet, so dass das auf ihrer Umfangsfläche ausgebildete Gewindeprofil im eingebauten Zustand ein für die Bearbeitung von Werkstücken erforderliches Versatzmaß besitzt. Werden die Gewinderollen vertauscht, ist das korrekte Versatzmaß nicht vorhanden. Bei der Bearbeitung eines Werkstücks kommt es in der Folge zu einem Schaden. Daher muss der Monteur dafür Sorge tragen, dass jede Gewinderolle in den richtigen Rollkopfarm eingesetzt wird. In der Praxis werden die Gewinderollen und die Rollkopfarme daher in geeigneter Weise markiert, um die Zuordnung darzustellen. Insgesamt erhöht sich dadurch der Aufwand und es besteht das Risiko einer Fehlmontage.

Ausgehend von dem erläuterten Stand der Technik liegt der Erfindung die Aufgabe zugrunde, einen Tangentialgewinderollkopf der eingangs genannten Art bereitzustellen, bei dem in einfacher Weise eine Fehlmontage der Gewinderollen ausgeschlossen ist.

Die Erfindung löst die Aufgabe durch den Gegenstand des unabhängigen Anspruchs 1. Vorteilhafte Ausgestaltungen finden sich in den abhängigen Ansprüchen, der Beschreibung und den Figuren.

Für einen Tangentialgewinderollkopf der eingangs genannten Art löst die Erfindung die Aufgabe dadurch, dass die Klauen der Gewinderollen und der Ritzel so ausgebildet sind, dass die Klauen der Gewinderollen jeweils nur mit den Klauen eines einzigen zugeordneten Ritzels zum Erreichen der Montageposition zusammenwirken können.

Der erfindungsgemäße Tangentialgewinderollkopf besitzt in an sich bekannter Weise zwei Rollkopfarme, in denen jeweils eine Gewinderolle aufgenommen ist. Die Rollkopfarme können lösbar an einem Rollkopfhalter gehalten sein. Sie können aber auch einstückig mit einem Rollkopfhalter ausgebildet sein. Der Tangentialgewinderollkopf besitzt zwei Gewinderollen, die jeweils auf einer Achse drehbar gelagert sind. Die Drehachsen der Gewinderollen verlaufen parallel zueinander. Auf jeder Achse ist ein Ritzel angeordnet, beispielsweise auf die jeweilige Achse aufgesteckt. Die Gewinderollen stehen in ihrer Montageposition jeweils seitlich mit einem der Ritzel in Eingriff. Dazu greifen Klauen der Gewinderollen und Klauen der Ritzel ineinander. Die Ritzel bilden Teil eines die beiden Gewinderollen koppelnden Getriebes, insbesondere eines Synchrongetriebes. Die Klauen der Gewinderollen sind zum Erreichen der Montageposition seitlich in die Klauen des jeweils zugeordneten Ritzels einschiebbar. In der Montageposition fallen Lagerbohrungen der Gewinderollen mit Lagerbohrungen der Ritzel zusammen, so dass die Drehachsen in die Ritzel und die Gewinderollen eingeschoben werden können.

Durch geeignete Ausbildung der Klauen von Gewinderollen und Ritzeln wird sichergestellt, dass die Gewinderollen jeweils nur in einer einzigen definierten Drehlage seitlich in die Montageposition eingeschoben werden können, wie dies grundsätzlich aus EP 0 811 443 B1 bekannt ist. Dadurch ist zunächst sichergestellt, dass die Gewinderollen jeweils die für den späteren ordnungsgemäßen Betrieb korrekte Drehlage besitzen. Eine Fehlmontage hinsichtlich der Drehlage ist also ausgeschlossen.

Darüber hinaus ist erfindungsgemäß eine eindeutige paarweise Zuordnung zwischen Gewinderollen und Ritzeln sichergestellt. Dazu sind die Klauen von Gewinderolle und zugeordnetem Ritzel für die beiden Paare von Gewinderollen und Ritzel unterschiedlich. Dadurch kann jede Gewinderolle die Montageposition nur bei Einsetzen in den Rollkopfarm mit dem "richtigen", nämlich dem zugeordneten Ritzel erreichen. Wird dagegen versucht, die Gewinderolle in den anderen Rollkopfarm einzusetzen, kann die Montageposition nicht erreicht werden. Insbesondere kommt es vor Erreichen der Montageposition zu einer Blockade bzw. einem Anstoßen der Klauen der Gewinderolle an den Klauen des Ritzels. Der Benutzer stellt dies fest und kann die Gewinderolle entsprechend in den anderen Rollkopfarm einsetzen. Eine Fehlmontage durch Einsetzen der Gewinderollen in den falschen Rollkopfarm ist erfindungsgemäß also ausgeschlossen. Gleichzeitig kann auf aufwendige Markierungen der Rollkopfarme und Gewinderollen, die im Stand der Technik eine Fehlmontage verhindern sollen, verzichtet werden.

Nach einer Ausgestaltung können die Klauen der Gewinderollen und die Klauen der den Gewinderollen jeweils zugeordneten Ritzeln komplementär zueinander ausgebildet sein. Die komplementäre Ausbildung kann bei sämtlichen nachfolgend erläuterten Ausgestaltungen zum Einsatz kommen. Die Klauen der Gewinderollen und die Klauen der zugeordneten Ritzel können gemeinsam insbesondere einen vollständigen Kreis bzw. Kreisring bilden.

Nach einer weiteren Ausgestaltung können die Gewinderollen jeweils ein Paar einander gegenüberliegender Klauen besitzen und/oder die Ritzel können jeweils ein paar einander gegenüberliegender Klauen besitzen.

Nach einer weiteren Ausgestaltung kann der Abstand zwischen mindestens zwei einander gegenüberliegender Enden der Klauen der Gewinderollen für die beiden Gewinderollen unterschiedlich sein. Beide Gewinderollen besitzen also eine oder mehr als eine Klaue, wobei jeweils zumindest zwei Klauenenden einander gegenüberliegen. Der Abstand zwischen diesen gegenüberliegenden Enden ist dabei bei der einen Gewinderolle anders als bei der anderen Gewinderolle. Wie bereits erwähnt, ist diese Ausgestaltung sowohl möglich bei Gewinderollen, die nur eine Klaue besitzen als auch bei Gewinderollen, die mehr als eine Klaue besitzen. Beispielsweise wenn die Gewinderollen jeweils ein Paar Klauen besitzen, kann der jeweilige Abstand zwischen sämtlichen gegenüberliegenden Enden der Klauen für die beiden Gewinderollen unterschiedlich sein.

Nach einer weiteren Ausgestaltung können zwei einander gegenüberliegende Enden der Klauen der Gewinderollen auf zwei gedachten zueinander parallelen Linien liegen. Diese Ausgestaltung ist fertigungstechnisch besonders einfach zu realisieren, beispielsweise durch Fräsen. Es kann dann wiederum der Abstand der zwei gedachten zueinander parallelen Linien für die beiden Gewinderollen unterschiedlich sein. Die gedachten Linien können in Einführrichtung der Gewinderollen in den Rollkopfarm bzw. das Ritzel verlaufen. Wiederum ist diese Ausgestaltung sowohl möglich bei Gewinderollen, die nur eine Klaue besitzen als auch bei Gewinderollen, die mehr als eine Klaue besitzen.

Nach einer weiteren Ausgestaltung können zwei Enden der Klauen der Gewinderollen jeweils auf einer gedachten gemeinsamen Linie liegen. Die gedachte gemeinsame Linie kann zum Beispiel senkrecht zur Einführrichtung der Gewinderollen in den Rollkopfarm bzw. als Ritzel verlaufen. Diese Ausgestaltung ist wiederum fertigungstechnisch besonders einfach realisierbar, beispielsweise durch Fräsen. Die gedachten gemeinsamen Linien können weiterhin in der Montageposition der beiden Gewinderollen voneinander beabstandet sein. Zum Beispiel können die gemeinsamen Linien für die beiden Gewinderollen einen unterschiedlichen Abstand zur Mittelachse der Gewinderollen besitzen. Insbesondere wenn die Gewinderollen jeweils ein Paar Klauen aufweisen, kann es sich bei den bei dieser Ausgestaltung genannten Enden der Klauen um die beiden anderen Enden der Klauen handeln als die bei der vorgenannten Ausgestaltung genannten Enden, die auf zwei gedachten zueinander parallelen Linien liegen. Nach einer weiteren Ausgestaltung können mindestens zwei einander gegenüberliegende Enden der Klauen der Gewinderollen auf den Schenkeln eines spitzen Winkels liegen. Der spitze Winkel kann für die beiden Gewinderollen unterschiedlich sein. Diese Ausgestaltung ist grundsätzlich bekannt aus der EP 0 811 443 B1.

Nach einer weiteren Ausgestaltung können die Klauen der Gewinderollen jeweils mindestens eine Anschlagsfläche bilden, wobei die Anschlagsflächen in der Montageposition jeweils an den Klauen der zugeordneten Ritzel anschlagen. Beispielsweise im Stand der Technik nach der EP 0 811 443 B1 besteht das Problem, dass die zueinander komplementären spitzen Winkel der Klauenenden von Gewinderollen und Ritzeln aufgrund unvermeidbarer Herstellungstoleranzen nicht exakt gleich groß ausgebildet werden können. Im Ergebnis werden die Klauen der Ritzel etwas kleiner ausgebildet als die entsprechende, durch die Klauen der Gewinderolle gebildete spitzwinklig zulaufende Aufnahme. Dadurch wiederum wird die Gewinderolle beim vollständigen Einschieben in das Ritzel etwas zu weit eingeschoben, so dass die Achsen von Gewinderolle und Ritzel nicht exakt miteinander fluchten. Es ist dann in der Praxis aufwendig, die gemeinsame Drehachse durch das Ritzel und die Gewinderolle zu schieben. Dieses Problem wird bei der vorgenannten Ausgestaltung der Erfindung überwunden, indem hier durch eine definierte Anschlagsfläche ein Anschlag gebildet wird, bei dessen Erreichen die Achsen bzw. Lagerbohrungen von Gewinderolle und Ritzel exakt zueinander fluchten. Die Montage der gemeinsamen Drehachse ist entsprechend vereinfacht.

Die Anschlagsflächen können beispielsweise einen gekrümmten Verlauf besitzen, beispielsweise einen kreisförmig gekrümmten Verlauf. Dabei können die Anschlagsflächen an den Außendurchmesser des zugeordneten Ritzels angepasst sein. Es wird auf diese Weise eine besonders einfache Selbstzentrierung erreicht. Auch möglich wäre es beispielsweise, dass die Anschlagsflächen zumindest abschnittsweise quer zur Einschubrichtung der Gewinderollen in die Montageposition verlaufen.

Die Anschlagsflächen können weiterhin jeweils durch einen zwei einander gegenüberliegende Klauenabschnitte der Gewinderollen verbindenden Anschlagsabschnitt gebildet sein. Bei dieser Ausgestaltung ist möglich, dass jede Gewinderolle nur eine Klaue besitzt. Diese Klaue besitzt zwei einander gegenüberliegende Klauenabschnitte, die durch den Anschlagsabschnitt miteinander verbunden sind. Das zugeordnete Ritzel kann dagegen zwei Klauen besitzen.

Nach einer weiteren Ausgestaltung kann vorgesehen sein, dass die Anschlagsabschnitte gegenüber den einander gegenüberliegenden Klauenabschnitten jeweils eine geringere Dicke besitzen, so dass zwischen den einander gegenüberliegenden Klauenabschnitten jeweils eine durch die Anschlagsfläche begrenzte Aufnahme für eine komplementär ausgebildete Klaue des zugeordneten Ritzels gebildet ist. Es wird also eine taschenförmige Aufnahme gebildet, seitlich begrenzt durch die Enden der einander gegenüberliegenden Klauenabschnitte. Der Boden der Aufnahme wird durch die Anschlagsfläche des Anschlagabschnitts gebildet. In dieser taschenförmigen Aufnahme wird eine Klaue des jeweils zugeordneten Ritzels aufgenommen. Nach einer weiteren Ausgestaltung können die Aufnahmen der beiden Gewinderollen unterschiedlich breit sein.

Grundsätzlich sind alle Kombinationen der vorgenannten erfindungsgemäßen Ausgestaltungen miteinander möglich, die die erfindungsgemäße eindeutige Zuordnung der Gewinderollen zu den Ritzeln erlauben.

Nach einer weiteren Ausgestaltung kann der Tangentialgewinderollkopf einen Rollkopfhalter umfassen, an dem die Rollkopfarme um eine gemeinsame, parallel zu den Rollachsen verlaufende Achse schwenkbar gelagert sind, sowie Einstellmittel zur Einstellung der Schwenklage der Rollkopfarme an dem Rollkopfhalter. Es können auch Gewindemittel zur Einstellung des Abstands der Gewinderollachsen voneinander vorgesehen sein.

Alternativ kann es sich auch um einen Tangentialgewinderollkopf mit feststehenden Rollkopfarmen handeln. Der Rollkopfarmhalter und die Rollkopfarme können dann beispielsweise einstückig ausgebildet sein.

Ausführungsbeispiele der Erfindung werden nachfolgend anhand von Figuren näher erläutert. Es zeigen schematisch:
- Fig. 1: einen erfindungsgemäßen Tangentialgewinderollkopf nach einem ersten Ausführungsbeispiel in einer perspektivischen Ansicht,
- Fig. 2: einen erfindungsgemäßen Tangentialgewinderollkopf nach einem zweiten Ausführungsbeispiel in einer perspektivischen Ansicht,
- Fig. 3: eine erste Gewinderolle eines erfindungsgemäßen Tangentialgewinderollkopfes in einer perspektivischen Ansicht,
- Fig. 4: ein erstes Ritzel eines erfindungsgemäßen Tangentialgewinderollkopfes in einer perspektivischen Ansicht,
- Fig. 5: das Ritzel aus Fig. 4 im an der Gewinderolle aus Fig. 3 montierten Zustand in einer perspektivischen Ansicht,
- Fig. 6: das Ritzel aus Fig. 4 im an der Gewinderolle aus Fig. 3 montierten Zustand in einer Seitenansicht,
- Fig. 7: eine Schnittansicht entlang der Linie A-A in Fig. 6,
- Fig. 8: die erste Gewinderolle aus Fig. 3 in einer Draufsicht,
- Fig. 9: das erste Ritzel aus Fig. 4 in einer Draufsicht,
- Fig. 10: eine zweite Gewinderolle eines erfindungsgemäßen Tangentialgewinderollkopfes in einer Draufsicht,
- Fig. 11: ein zweites Ritzel eines erfindungsgemäßen Tangentialgewinderollkopfes in einer Draufsicht,
- Fig. 12: eine erste Gewinderolle eines erfindungsgemäßen Tangentialgewinderollkopfes nach einem weiteren Ausführungsbeispiel in einer Draufsicht,
- Fig. 13: ein erstes Ritzel eines erfindungsgemäßen Tangentialgewinderollkopfes nach einem weiteren Ausführungsbeispiel in einer Draufsicht,
- Fig. 14: eine zweite Gewinderolle eines erfindungsgemäßen Tangentialgewinderollkopfes nach einem weiteren Ausführungsbeispiel in einer Draufsicht, und
- Fig. 15: ein zweites Ritzel eines erfindungsgemäßen Tangentialgewinderollkopfes nach einem weiteren Ausführungsbeispiel in einer Draufsicht,

Soweit nichts anderes angegeben ist, bezeichnen in den Figuren gleiche Bezugszeichen gleiche Gegenstände.

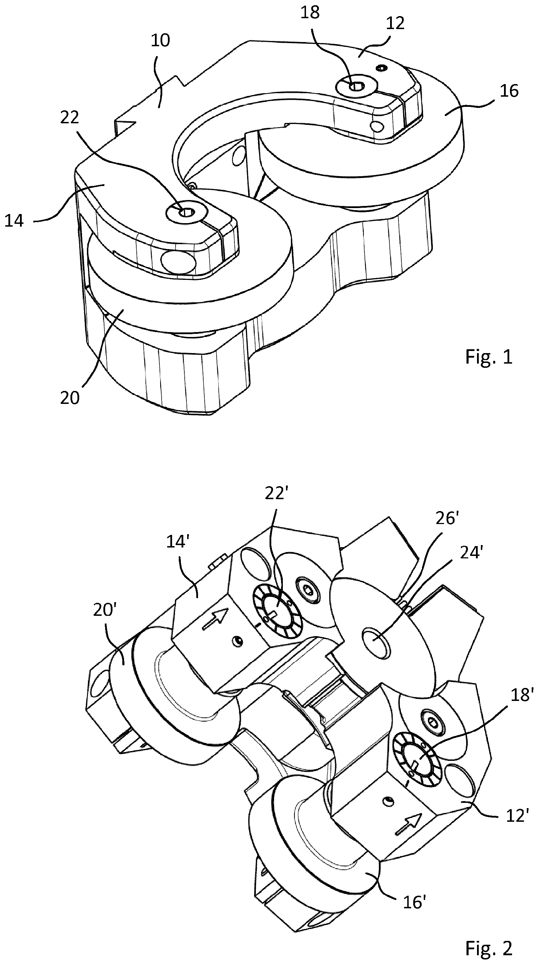

Der in Fig. 1 gezeigte erfindungsgemäße Tangentialgewinderollkopf umfasst einen Rollkopfarmhalter 10, an dem ein erster gabelförmiger Rollkopfarm 12 und ein zweiter gabelförmiger Rollkopfarm 14 einstückig und feststehend ausgebildet sind. In dem ersten Rollkopfarm 12 ist eine erste Gewinderolle 16 auf einer Achse 18 drehbar gelagert. In dem zweiten Rollkopfarm 14 ist eine zweite Gewinderolle 20 ebenfalls auf einer Achse 22 drehbar gelagert. Die Achsen 18, 22 verlaufen parallel zueinander. Der grundsätzliche Aufbau und die Funktion eines solchen Tangentialgewinderollkopfes sind bekannt und werden daher nicht näher erläutert.

Fig. 2 zeigt eine alternative Form eines erfindungsgemäßen Tangentialgewinderollkopfes. Dieser Tangentialgewinderollkopf besitzt ebenfalls zwei Rollkopfarme 12', 14', in denen erste und zweite Gewinderollen 16', 20' auf Achsen 18', 22' drehbar gelagert sind. Wiederum verlaufen die Achsen 18', 22' parallel zueinander. Im Unterschied zu dem Tangentialgewinderollkopf aus Fig. 1 sind bei dem Tangentialgewinderollkopf der Fig. 2 die Rollkopfarme 12', 14' um eine gemeinsame, parallel zu den Rollachsen 18', 22' verlaufende Achse 24' schwenkbar gelagert. Bei dem Bezugszeichen 26' ist eine Einstellfeder erkennbar, und es sind nicht näher dargestellte Gewindemittel gezeigt, über die die Schwenklage der Rollkopfarme 12', 14' eingestellt werden kann. Auch die Ausgestaltung und Funktion eines solchen Tangentialgewinderollkopfes mit verschwenkbaren Rollkopfarmen ist an sich bekannt und soll daher nicht näher erläutert werden.

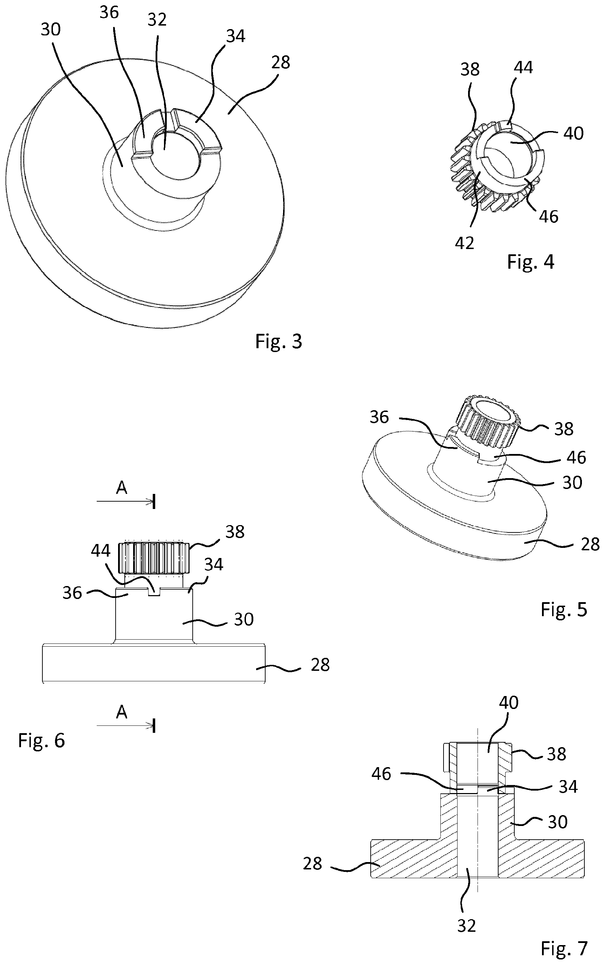

In Fig. 3 ist eine erste Gewinderolle 28 gezeigt, die ebenso wie die nachfolgend noch erläuterten Gewinderollen bei den in den Figuren 1 und 2 dargestellten Tangentialgewinderollköpfen zum Einsatz kommen kann. Die Gewinderolle 28 besitzt eine durch einen hohlzylindrischen Fortsatz 30 gebildete Lagerbohrung 32, in die in der Montageposition in dem Tangentialgewinderollkopf die Drehachse eingesetzt werden kann. An dem Ende des hohlzylindrischen Fortsatzes 30 sind zwei einander gegenüberliegende Klauen 34, 36 ausgebildet. In Fig. 4 ist ein erstes Ritzel 38 gezeigt, welches mit der in Fig. 3 gezeigten ersten Gewinderolle 28 in Eingriff kommen kann. Das erste Ritzel 38 ist Teil eines die beiden Gewinderollen des Tangentialgewinderollkopfes koppelnden Synchrongetriebes. Das erste Ritzel 38 besitzt eine hohlzylindrische Grundform und bildet so ebenfalls eine Lagerbohrung 40 zum Einsetzen der Drehachse. Auch besitzt das erste Ritzel 38 einen hohlzylindrischen Fortsatz 42, an dem zwei Klauen 44, 46 ausgebildet sind, die komplementär zu den Klauen 34, 36 der in Fig. 3 gezeigten ersten Gewinderolle 28 ausgestaltet sind. Dadurch können die Klauen 34, 36 der ersten Gewinderolle 28 mit den Klauen 44, 46 des ersten Ritzels 38 in Eingriff gelangen, wie dies in den Figuren 5 bis 7 gezeigt ist. Dabei wird die erste Gewinderolle 28 seitlich in den jeweiligen Rollkopfarm und auf das erste Ritzel 38 derart aufgeschoben, dass die Klaue 44 des ersten Ritzels 38 von der in Fig. 3 unteren Seite in die zwischen den einander gegenüberliegenden Enden der Klauen 34, 36 gebildeten Freiraum gelangt bis die Klaue 46 an der Unterseite der Klauen 34, 36 in Fig. 3 anschlägt. Dies wird nachfolgend anhand unterschiedlicher Ausführungsbeispiele noch näher erläutert.

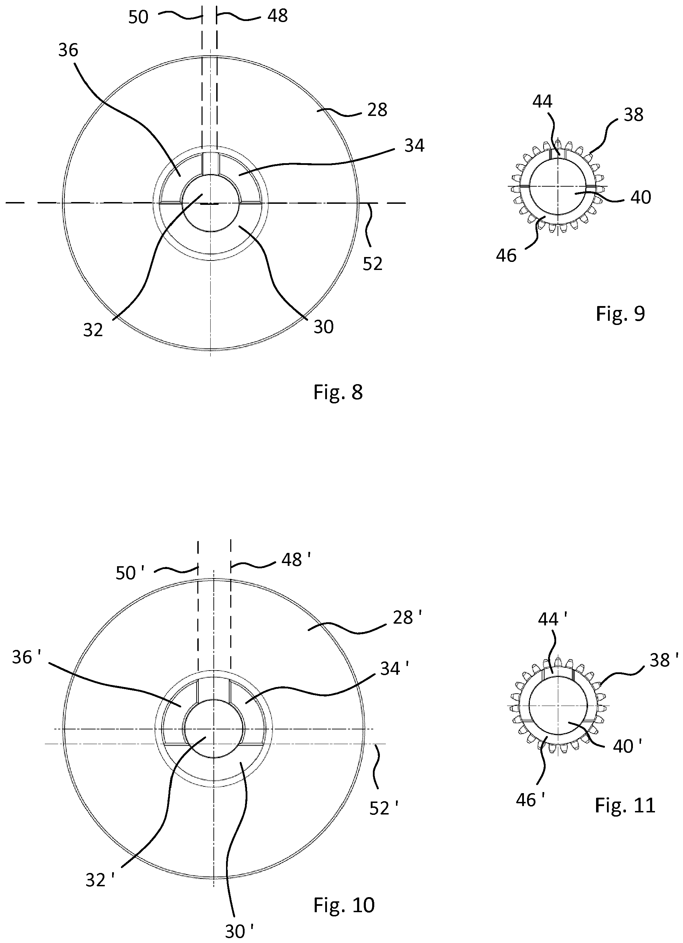

Fig. 8 zeigt die in Fig. 3 gezeigte erste Gewinderolle 28, während Fig. 9 das in Fig. 4 gezeigte erste Ritzel 38 zeigt. In Fig. 10 ist eine in dem gleichen Tangentialgewinderollkopf wie die erste Gewinderolle 28 aus Fig. 8 einzusetzende zweite Gewinderolle 28' gezeigt. Diese weist wiederum einen hohlzylindrischen Fortsatz 30' auf, der eine Aufnahmebohrung 32' für die Drehachse der zweiten Gewinderolle 28' definiert sowie ein Paar Klauen 34', 36' bildet. In Fig. 11 ist das in der Montageposition mit der zweiten Gewinderolle 28' aus Fig. 10 zusammenwirkende zweite Ritzel 38' gezeigt. Dieses besitzt wiederum eine hohlzylindrische Grundform, die eine Aufnahmebohrung 40' für die Drehachse bildet sowie ein Paar Klauen 44', 46' besitzt.

In Fig. 8 ist zu erkennen, dass zwei einander gegenüberliegende Enden der Klauen 34, 36 der ersten Gewinderolle 28 auf zwei gedachten zueinander parallelen Linien 48, 50 liegen. Außerdem ist zu erkennen, dass die beiden anderen Enden der Klauen 34, 36 auf einer gedachten gemeinsamen Linie 52 liegen. Diese Enden bilden jeweils eine Anschlagsfläche für die Klaue 46 des ersten Ritzels 38, wenn die erste Gewinderolle 28 seitlich auf das erste Ritzel 38 aufgeschoben wird, in Fig. 9 von oben nach unten. Dabei gelangt die Klaue 44 des ersten Ritzels 38 in den Freiraum zwischen den einander gegenüberliegenden und auf den parallel verlaufenden Linien 48, 50 liegenden Enden der Klauen 34, 36 und die Klaue 46 des ersten Ritzels 38 schlägt an den anderen Enden der Klauen 34, 36 an. Durch diese Ausgestaltung ist einerseits sichergestellt, dass die Gewinderolle nur in einer einzigen definierten Drehlage in die mit dem Ritzel 38 in Eingriff stehende Montageposition gebracht werden kann. Andererseits ist durch die durch die Enden der Klauen 34, 36 gebildeten Anschlagsflächen sichergestellt, dass die Lagerbohrungen 32, 40 in der Montageposition zum Einschieben der Drehachse exakt zueinander fluchten.

Die in Fig. 10 gezeigte zweite Gewinderolle 28' unterscheidet sich von der in Fig. 8 gezeigten ersten Gewinderolle 28 lediglich hinsichtlich der Ausbildung der Klauen 34', 36'. So liegen auch die einander gegenüberliegenden Enden der Klauen 34', 36' auf zwei gedachten zueinander parallelen Linien 48', 50' der Abstand zwischen den gedachten Linien 48', 50' ist jedoch größer als der Abstand zwischen den gedachten Linien 48, 50 der ersten Gewinderolle 28 aus Fig. 8. Weiterhin liegen auch die anderen Enden der Klauen 34', 36' der in Fig. 10 gezeigten zweiten Gewinderolle 28' auf einer gedachten gemeinsamen Linie 52'. Diese gedachte gemeinsame Linie 52' weicht in der in Montageposition jedoch von der gedachten gemeinsamen Linie 52 der ersten Gewinderolle 28 aus Fig. 8 ab. Insbesondere sind die gedachten gemeinsamen Linien 52 und 52' unterschiedlich von der durch die Lagerbohrung 32 bzw. 32' verlaufende Mittelachse beabstandet. Während die gemeinsame Linie 52 der in Fig. 8 gezeigten Gewinderolle 28 auf der Mittelachse der Gewinderolle 28 liegt, ist die gemeinsame Linie 52' der in Fig. 10 gezeigten Gewinderolle 28' beabstandet zu der Mittelachse, nämlich in Figur 10 nach unten versetzt. Das in Fig. 11 gezeigte zweite Ritzel 38' besitzt wiederum zu den Klauen 34', 36' komplementär ausgebildete Klauen 44', 46'. Die Funktion beim Einschieben der zweiten Gewinderolle 28' auf das zweite Ritzel 38' ist analog, wie oben zu den Figuren 8 und 9 erläutert. Durch die anders ausgebildeten Klauen ist dabei sichergestellt, dass die erste Gewinderolle 28 aus Fig. 8 eindeutig dem ersten Ritzel 38 aus Fig. 9 zugeordnet ist, und dass die zweite Gewinderolle 28' aus Fig. 10 eindeutig dem zweiten Ritzel 38' aus Fig. 11 zugeordnet ist. Ein Einnehmen der Montageposition durch ein Zusammensetzen der ersten Gewinderolle 28 mit dem zweiten Ritzel 38' ist ebenso unmöglich wie durch ein Zusammensetzen der zweiten Gewinderolle 28' mit dem ersten Ritzel 38.

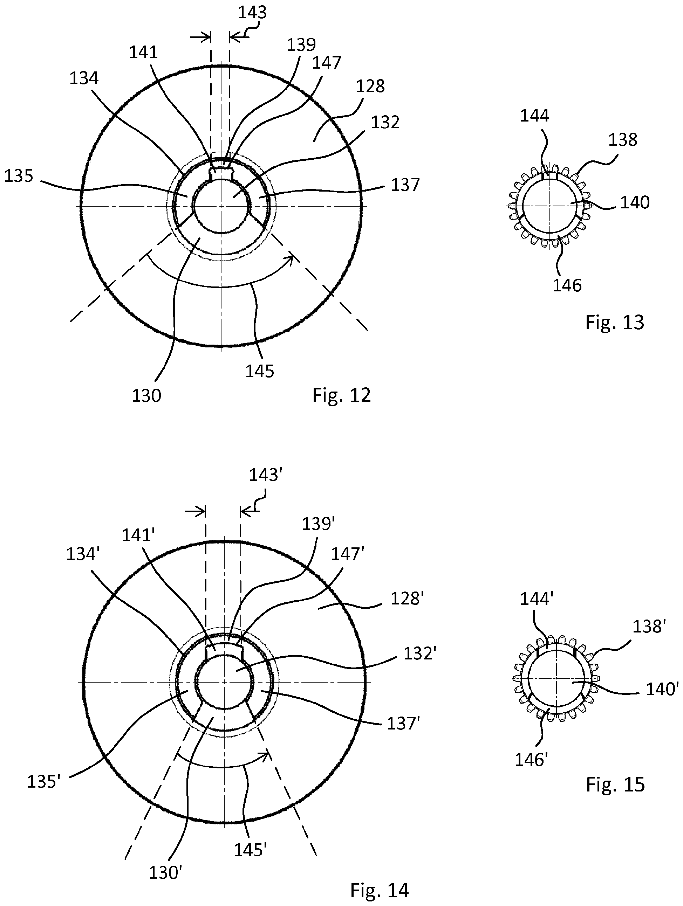

In den Figuren 12 bis 15 ist ein weiteres Ausführungsbeispiel von in den Tangentialgewinderollköpfen der Figuren 1 und 2 einsetzbaren ersten und zweiten Gewinderollen bzw. zugeordneten ersten und zweiten Ritzeln gezeigt. In Fig. 12 ist dabei eine erste Gewinderolle 128 dargestellt, die wiederum einen eine Lagerbohrung 132 für die Drehachse bildenden hohlzylindrischen Fortsatz 130 aufweist. Die in Fig. 12 gezeigte erste Gewinderolle 128 unterscheidet sich von der in Fig. 8 gezeigten ersten Gewinderolle 28 hinsichtlich der Ausbildung der Klauen. So besitzt die erste Gewinderolle 128 nur eine Klaue 134. Diese Klaue 134 besitzt einen ersten Klauenabschnitt 135 und einen zweiten Klauenabschnitt 137. Die beiden Klauenabschnitte 135, 137 sind durch einen Anschlagsabschnitt 139 miteinander verbunden. Der Anschlagsabschnitt 139 besitzt eine geringere Dicke als die Klauenabschnitte 135, 137, so dass durch den Anschlagsabschnitt 139 und die Klauenabschnitte 135, 137 eine Aufnahme 141 gebildet ist. Die Aufnahme 141 besitzt eine Breite 143. Die einander gegenüberliegenden Enden der Klauenabschnitte 135, 137 liegen jeweils auf den Schenkeln eines spitzen Winkels 145.

Das in Fig. 13 gezeigte erste Ritzel 138 besitzt wiederum eine hohlzylindrische Grundform, die eine Lagerbohrung 140 für die Drehachse bildet. Das erste Ritzel 138 besitzt weiterhin zwei Klauen 144, 146. Die Klauen 144, 146 sind komplementär ausgebildet zu der Klaue 134 der ersten Gewinderolle 128 aus Fig. 12. Insbesondere kann die erste Gewinderolle 128 seitlich derart auf das erste Ritzel 138 aufgeschoben werden, dass die Klaue 144 in der Aufnahme 141 aufgenommen wird und insbesondere an der durch den Anschlagsabschnitt 139 gebildeten Anschlagsfläche 147 anschlägt. Dabei kommt die Klaue 146 mit ihren Enden an den einander gegenüberliegenden Enden der Klauenabschnitte 135, 137 zu liegen. In diesem Zustand fluchten die Lagerbohrungen 132, 140 miteinander und es ist wiederum sichergestellt, dass die erste Gewinderolle 128 nur in einer einzigen Drehposition auf das erste Ritzel 138 aufgeschoben werden kann.

In Fig. 14 ist eine zweite Gewinderolle 128' gezeigt, die gemeinsam mit der ersten Gewinderolle 128 in den Tangentialgewinderollkopf eingesetzt werden kann. Die zweite Gewinderolle 128' besitzt wiederum einen hohlzylindrischen Fortsatz 130', der eine Lagerbohrung 132' für das Einsetzen der Drehachse bildet. Eine Klaue 134' umfasst zwei Klauenabschnitte 135', 137', die derart durch einen Anschlagsabschnitt 139' miteinander verbunden sind, dass wiederum eine Aufnahme 141' und eine Anschlagsfläche 147' gebildet werden. Die einander gegenüberliegenden Enden der Klauenabschnitte 135', 137' liegen wiederum auf den Schenkeln eines spitzen Winkels 145' und die Aufnahme 141' besitzt eine Breite 143'. Die in Fig. 14 gezeigte zweite Gewinderolle 128' unterscheidet sich von der ersten Gewinderolle 128 aus Fig. 12 lediglich hinsichtlich der Ausbildung der Klaue 134'. So besitzt einerseits die Aufnahme 141' eine größere Breite 143' als die Aufnahme 141 der ersten Gewinderolle 128. Zum anderen ist der spitze Winkel 145' bei der zweiten Gewinderolle 128' kleiner als bei der ersten Gewinderolle 128.

Das in Fig. 15 gezeigte zweite Ritzel 138' bildet wiederum eine Lagerbohrung 140' für die Drehachse und besitzt zwei Klauen 144' und 146', die komplementär zu der Klaue 134' der zweiten Gewinderolle 128' ausgebildet sind. In gleicher Weise, wie oben zu den Figuren 12 und 13 erläutert, kann die zweite Gewinderolle 128' auf das zweite Ritzel 138' aufgeschoben werden.

Durch die Ausgestaltung der Klauen 134 und 134' ist dabei wiederum sichergestellt, dass die erste Gewinderolle 128 nur mit dem ersten Ritzel 138 zusammenwirkend in die Montageposition gebracht werden kann und die zweite Gewinderolle 128' nur mit dem zweiten Ritzel 138' zusammenwirkend in die Montageposition gebracht werden kann.

### Bezugszeichenliste

- 10: Rollkopfarmhalter
- 12: Erster Rollkopfarm
- 12': Erster Rollkopfarm
- 14: Zweiter Rollkopfarm
- 14': Zweiter Rollkopfarm
- 16: Erste Gewinderolle
- 16': Erste Gewinderolle
- 18: Achse
- 18': Achse
- 20: Zweite Gewinderolle
- 20': Zweite Gewinderolle
- 22: Achse
- 22': Achse
- 24': Achse
- 26': Einstellfeder
- 28: Erste Gewinderolle
- 28': Zweite Gewinderolle
- 30: Hohlzylindrischer Fortsatz
- 30': Hohlzylindrischer Fortsatz
- 32: Lagerbohrung
- 32': Lagerbohrung
- 34: Klaue
- 34': Klaue
- 36: Klaue
- 36': Klaue
- 38: Erstes Ritzel
- 38': Zweites Ritzel
- 40: Lagerbohrung
- 40': Lagerbohrung
- 42: Hohlzylindrischer Fortsatz
- 44: Klaue
- 44': Klaue
- 46: Klaue
- 46': Klaue
- 48: Gedachte Linie
- 48': Gedachte Linie
- 50: Gedachte Linie
- 50': Gedachte Linie
- 52: Gedachte Linie
- 52': Gedachte Linie
- 128: Erste Gewinderolle
- 128': Zweite Gewinderolle
- 130: Hohlzylindrischer Fortsatz
- 130': Hohlzylindrischer Fortsatz
- 132: Lagerbohrung
- 132': Lagerbohrung
- 134: Klaue
- 134': Klaue
- 135: Erster Klauenabschnitt
- 135': Erster Klauenabschnitt
- 137: Zweiter Klauenabschnitt
- 137': Zweiter Klauenabschnitt
- 139: Anschlagsabschnitt
- 141: Aufnahme
- 141': Aufnahme
- 143: Breite
- 143': Breite
- 144: Klaue
- 144': Klaue
- 145: Spitzer Winkel
- 145': Spitzer Winkel
- 146: Klaue
- 146': Klaue
- 147: Anschlagsfläche
- 147': Anschlagsfläche

## Patentansprüche

1. Tangentialgewinderollkopf umfassend zwei gabelförmige Rollkopfarme (12, 12', 14, 14'), in denen jeweils eine Gewinderolle (28, 28', 128, 128') auf einer Achse (18, 18', 22, 22') drehbar gelagert ist, wobei die Gewinderollen (28, 28', 128, 128') jeweils mit einem auf einer der Achsen (18, 18', 22, 22', 24') sitzenden Ritzel (38, 38', 138, 138') eines die Gewinderollen (28, 28', 128, 128') koppelnden Getriebes in Eingriff stehen, wobei die Gewinderollen (28, 28', 128, 128') vor dem Einbau der Achsen (18, 18', 22, 22') seitlich in eine Montageposition in die Rollkopfarme (12, 12', 14, 14') einschiebbar sind, in welcher jeweils eine der Achsen (18, 18', 22, 22') in eine Lagerbohrung (32, 32', 132, 132') der Gewinderollen (28, 28', 128, 128') eingeschoben werden kann, wobei die Gewinderollen (28, 28', 128, 128') und die Ritzel (38, 38', 138, 138') zusammenwirkende Klauen (34, 34', 36, 36', 44, 44', 46, 46', 134, 134', 144, 144', 146, 146') besitzen, wobei die Klauen der Gewinderollen (28, 28', 128, 128') und der Ritzel (38, 38', 138, 138') so ausgebildet sind, dass die Gewinderollen (28, 28', 128, 128') jeweils nur in einer einzigen definierten Drehlage seitlich in die Montageposition eingeschoben werden können, **dadurch gekennzeichnet, dass** die Klauen der Gewinderollen (28, 28', 128, 128') und der Ritzel (38, 38', 138, 138') weiterhin so ausgebildet sind, dass die Klauen (34, 34', 36, 36', 134, 134') der Gewinderollen (28, 28', 128, 128') jeweils nur mit den Klauen (44, 44', 46, 46', 144, 144', 146, 146') eines einzigen zugeordneten Ritzels (38, 38', 138, 138') zum Erreichen der Montageposition zusammenwirken können.

2. Tangentialgewinderollkopf nach Anspruch 1, **dadurch gekennzeichnet, dass** die Klauen (34, 34', 36, 36', 134, 134',) der Gewinderollen (28, 28', 128, 128') und die Klauen (44, 44', 46, 46', 144, 144', 146, 146') der den Gewinderollen (28, 28', 128, 128') jeweils zugeordneten Ritzel (38, 38', 138, 138') komplementär zueinander ausgebildet sind.

3. Tangentialgewinderollkopf nach einem der vorhergehenden Ansprüche, **dadurch gekennzeichnet, dass** die Gewinderollen (28, 28') jeweils ein Paar einander gegenüberliegender Klauen (34, 34', 36, 36') besitzen, und/oder dass die Ritzel (38, 38', 138, 138') ebenfalls jeweils ein Paar einander gegenüberliegender Klauen (44, 44', 46, 46', 144, 144', 146, 146') besitzen.

4. Tangentialgewinderollkopf nach einem der vorhergehenden Ansprüche, **dadurch gekennzeichnet, dass** der Abstand zwischen mindestens zwei einander gegenüberliegender Enden der Klauen (34, 34', 36, 36') der Gewinderollen (28, 28') für die beiden Gewinderollen (28, 28') unterschiedlich ist.

5. Tangentialgewinderollkopf nach einem der vorhergehenden Ansprüche, **dadurch gekennzeichnet, dass** zwei einander gegenüberliegende Enden der Klauen (34, 34', 36, 36') der Gewinderollen (28, 28') auf zwei gedachten zueinander parallelen Linien (48, 48', 50, 50') liegen

6. Tangentialgewinderollkopf nach Anspruch 5, **dadurch gekennzeichnet, dass** der Abstand der zwei gedachten zueinander parallelen Linien (48, 48', 50, 50') für die beiden Gewinderollen (28, 28') unterschiedlich ist.

7. Tangentialgewinderollkopf nach einem der vorhergehenden Ansprüche, **dadurch gekennzeichnet, dass** zwei Enden der Klauen (34, 34', 36, 36') der Gewinderollen (28, 28') jeweils auf einer gedachten gemeinsamen Linie (52, 52') liegen.

8. Tangentialgewinderollkopf nach Anspruch 7, **dadurch gekennzeichnet, dass** die gedachten gemeinsamen Linien (52, 52') in der Montageposition der beiden Gewinderollen (28, 28') voneinander beabstandet sind.

9. Tangentialgewinderollkopf nach einem der vorhergehenden Ansprüche, **dadurch gekennzeichnet, dass** mindestens zwei einander gegenüberliegende Enden der Klauen (134, 134') der Gewinderollen (128, 128') auf den Schenkeln eines spitzen Winkels (145, 145') liegen.

10. Tangentialgewinderollkopf nach Anspruch 9, **dadurch gekennzeichnet, dass** der spitze Winkel (145, 145') für die beiden Gewinderollen (128, 128') unterschiedlich ist.

11. Tangentialgewinderollkopf nach einem der vorhergehenden Ansprüche, **dadurch gekennzeichnet, dass** die Klauen (34, 34', 36, 36', 134, 134') der Gewinderollen (28, 28', 128, 128') jeweils mindestens eine Anschlagsfläche (147, 147') bilden, wobei die Anschlagsflächen (147, 147') in der Montageposition jeweils an den Klauen (44, 44', 46, 46', 144, 144', 146, 146') der zugeordneten Ritzel (38, 38', 138, 138') anschlagen.

12. Tangentialgewinderollkopf nach Anspruch 11, **dadurch gekennzeichnet, dass** die Anschlagsflächen (147, 147') einen gekrümmten Verlauf besitzen.

13. Tangentialgewinderollkopf nach einem der Ansprüche 11 oder 12, **dadurch gekennzeichnet, dass** die Anschlagsflächen (147, 147') jeweils durch einen zwei einander gegenüberliegende Klauenabschnitte (135, 135', 137, 137') der Gewinderollen (128, 128') verbindenden Anschlagsabschnitt (139, 139') gebildet sind.

14. Tangentialgewinderollkopf nach Anspruch 13, **dadurch gekennzeichnet, dass** die Anschlagsabschnitte (139, 139') gegenüber den einander gegenüberliegenden Klauenabschnitten (135, 135', 137, 137') jeweils eine geringere Dicke besitzen, so dass zwischen den einander gegenüberliegenden Klauenabschnitten (135, 135', 137, 137') jeweils eine durch die Anschlagsfläche (147, 147') begrenzte Aufnahme (141, 141') für eine komplementär ausgebildete Klaue (144, 144', 146, 146') des zugeordneten Ritzels (138, 138') gebildet ist.

15. Tangentialgewinderollkopf nach Anspruch 14, **dadurch gekennzeichnet, dass** die Aufnahmen (141, 141') der beiden Gewinderollen (128, 128') unterschiedlich breit sind.

16. Tangentialgewinderollkopf nach einem der vorhergehenden Ansprüche, weiter umfassend einen Rollkopfhalter, an dem die Rollkopfarme (12', 14') um eine gemeinsame, parallel zu den Rollenachsen verlaufende Achse (24') schwenkbar gelagert sind, sowie Einstellmittel zur Einstellung der Schwenklage der Rollkopfarme (12', 14') an dem Rollkopfhalter.

## Claims

1. A tangential thread rolling head, comprising two fork-shaped rolling head arms (12, 12', 14, 14'), in which one thread roll (28, 28', 128, 128') at a time is rotatably mounted on an axis (18, 18', 22, 22'), wherein the thread rolls (28, 28', 128, 128') each at a time mesh with a sprocket (38, 38', 138, 138') sitting on one of the axes (18, 18', 22, 22') of a gearing coupling the thread rolls (28, 28', 128, 128'), wherein before the installation of the axes (18, 18', 22, 22'), the thread rolls (28, 28', 128, 128') can be laterally inserted into the rolling head arms (12, 12'; 14, 14') into a mounting position in which one of the axes (18, 18', 22, 22') at a time can be inserted into a bearing bore (32, 32', 132, 132') of the thread rolls (28, 28', 128, 128'), wherein the thread rolls (28, 28', 128, 128') and the sprockets (38, 38', 138, 138') have co-operating claws (34, 34', 36, 36', 44, 44', 46, 46', 134, 134', 144, 144', 146, 146'), the claws of the thread rolls (28, 28', 128, 128') and of the sprockets (38, 38', 138, 138') being designed such that the thread rolls (28, 28', 128, 128') can be laterally inserted into the mounting position only in one single defined rotational position, **characterised in that** the claws of the thread rolls (28, 28', 128, 128') and of the sprockets (38, 38', 138, 138') are furthermore designed such that the claws (34, 34', 36, 36', 134, 134') of the thread rolls (28, 28', 128, 128') can co-operate only with the claws (44, 44', 46, 46' 144, 144' 146, 146') of one single associated sprocket (38, 38', 138, 138') at a time for reaching the mounting position.

2. The tangential thread rolling head according to claim 1, **characterised in that** the claws (34, 34', 36, 36', 134, 134') of the thread rolls (28, 28', 128, 128') and the claws (44, 44', 46, 46' 144, 144' 146, 146') of the sprockets (38, 38', 138, 138') respectively associated to the thread rolls (28, 28', 128, 128') are designed so as to be complementary to each other.

3. A tangential thread rolling head according to one of the preceding claims, **characterised in that** the thread rolls (28, 28', 128, 128') have each one a pair of facing claws (34, 34', 36, 36'), and/or that the sprockets (38, 38', 138, 138') have also a pair of facing claws (44, 44', 46, 46' 144, 144' 146, 146').

4. A tangential thread rolling head according to one of the preceding claims, **characterised in that** the distance between at least two opposing ends of the claws (34, 34', 36, 36') of the thread rolls (28, 28') is different for the two thread rolls (28, 28').

5. A tangential thread rolling head according to one of the preceding claims, **characterised in that** two opposing ends of the claws (34, 34', 36, 36') of the thread rolls (28, 28') are situated on two imaginary parallel lines (48, 48', 50, 50')

6. The tangential thread rolling head according to claim 5, **characterised in that** the distance of the two imaginary parallel lines (48, 48', 50, 50') is different for the two thread rolls (28, 28').

7. A tangential thread rolling head according to one of the preceding claims, **characterised in that** two ends of the claws (34, 34', 36, 36') of the thread rolls (28, 28') are each one at a time situated on an imaginary common line (52, 52').

8. The tangential thread rolling head according to claim 7, **characterised in that** the imaginary common lines (52, 52') are spaced apart from each other in the mounting position of the thread rolls (28, 28').

9. A tangential thread rolling head according to one of the preceding claims, **characterised in that** at least two opposing ends of the claws (134, 134') of the thread rolls (128, 128') are situated on the legs of an acute angle (145, 145').

10. The tangential thread rolling head according to claim 9, **characterised in that** the acute angle (145, 145') is different for the two thread rolls (128, 128').

11. A tangential thread rolling head according to one of the preceding claims, **characterised in that** the claws (34, 34', 36, 36', 134, 134') of the thread rolls (28, 28', 128, 128') each form at least one impact surface (147, 147'), wherein the impact surfaces (147, 147') abut on the claws (34, 34', 36, 36', 44, 44', 46, 46', 134, 134', 144, 144', 146, 146') of the respective associated sprockets (38, 38', 138, 138') in the mounting position.

12. The tangential thread rolling head according to claim 11, **characterised in that** the impact surfaces (147, 147') have a curved course.

13. A tangential thread rolling head according to one of the claims 11 or 12, **characterised in that** the impact surfaces (147, 147') are each at a time formed by an impact section (139, 139') which connects two opposing claw sections (135, 135', 137, 137) of the thread rolls (128, 128').

14. The tangential thread rolling head according to claim 13, **characterised in that** the impact sections (139, 139') each have a smaller thickness with respect to the opposing claw sections (135, 135', 137, 137), so that an accommodation (141, 141') limited by the impact surface (147, 147') for a complementary shaped claw (144, 144', 146, 146') of the associated sprocket (138, 138') is formed between the opposing claw sections (135, 135', 137, 137).

15. The tangential thread rolling head according to claim 14, **characterised in that** the accommodations (141, 141') of the two thread rolls (128, 128') have different widths.

16. A tangential thread rolling head according to one of the preceding claims, further comprising a rolling head holder, on which the rolling head arms (12', 14') are swivel mounted around a common axis (24') extending parallel to the rollers axes, as well as adjustment means for the adjustment of the swivel position of the rolling head arms (12', 14') on the rolling head holder.

## Revendications

1. Tête à rouler des filets tangentielle, comportant deux bras de tête à rouler (12, 12', 14, 14') en forme de fourche, dans lesquels un galet de filetage (28, 28', 128, 128') est respectivement monté tournant sur un arbre (18, 18', 22, 22'), les galets de filetage (28, 28', 128, 128') chacun s'engrenant avec un pignon (38, 38', 138, 138') assis sur une des arbres (18, 18', 22, 22') d'une boîte de vitesses couplant les galets de filetage (28, 28', 128, 128'), avant l'installation des arbres (18, 18', 22, 22'), les galets de filetage (28, 28', 128, 128') pouvant être latéralement insérés dans les bras de tête à rouler (12, 12', 14, 14') dans une position de montage dans laquelle un des arbres (18, 18', 22, 22') à la fois peut être inséré dans un perçage de logement (32, 32', 132, 132') des galets de filetage (28, 28', 128, 128'), les galets de filetage (28, 28', 128, 128') et les pignons (38, 38', 138, 138') ayant des griffes (34, 34', 36, 36', 44, 44', 46, 46', 134, 134', 144, 144', 146, 146') coopérantes, les griffes des galets de filetage (28, 28', 128, 128') et des pignons (38, 38', 138, 138') étant conçues de sorte que les galets de filetage (28, 28', 128, 128') peuvent être latéralement insérés dans la position de montage seulement en une position de rotation unique définie, **caractérisée en ce que** les griffes des galets de filetage (28, 28', 128, 128') et des pignons (38, 38', 138, 138') sont en outre conçues tellement que les griffes (34, 34', 36, 36', 134, 134') des galets de filetage (28, 28', 128, 128') peuvent coopérer seulement avec les griffes (44, 44', 46, 46' 144, 144' 146, 146') d'un seul pignon associé (38, 38', 138, 138') pour atteindre la position de montage.

2. Tête à rouler des filets tangentielle selon la revendication 1, **caractérisée en ce que** les griffes (34, 34', 36, 36', 134, 134') des galets de filetage (28, 28', 128, 128') et les griffes (44, 44', 46, 46' 144, 144' 146, 146') des pignons respectives (38, 38', 138, 138') associés aux galets de filetage (28, 28', 128, 128') sont conçues comme complémentaires les unes aux autres.

3. Tête à rouler des filets tangentielle selon une des revendications précédentes, **caractérisée en ce que** les galets de filetage (28, 28', 128, 128') ont chacun une paire de griffes (34, 34', 36, 36') opposées l'une de l'autre, et/ou que les pignons (38, 38', 138, 138') ont aussi une paire de griffes (44, 44', 46, 46' 144, 144' 146, 146') opposées l'une de l'autre.

4. Tête à rouler des filets tangentielle selon une des revendications précédentes, **caractérisée en ce que** la distance entre au moins deux extrémités opposées l'une de l'autre des griffes (34, 34', 36, 36') des galets de filetage (28, 28') est différente pour les deux galets de filetage (28, 28').

5. Tête à rouler des filets tangentielle selon une des revendications précédentes, **caractérisée en ce que** deux extrémités opposées l'une de l'autre des griffes (34, 34', 36, 36') des galets de filetage (28, 28') sont situées sur deux lignes l'une à l'autre parallèles imaginaires (48, 48', 50, 50').

6. Tête à rouler des filets tangentielle selon la revendication 5, **caractérisée en ce que** la distance des deux lignes opposées l'une à l'autre parallèles imaginaires (48, 48', 50, 50') est différente pour les deux galets de filetage (28, 28').

7. Tête à rouler des filets tangentielle selon une des revendications précédentes, **caractérisée en ce que** deux extrémités des griffes (34, 34', 36, 36') des galets de filetage (28, 28') sont situées sur une ligne commune imaginaire (52, 52').

8. Tête à rouler des filets tangentielle selon la revendication 7, **caractérisée en ce que** les lignes communes imaginaires (52, 52') sont espacées l'une de l'autre dans la position de montage des galets de filetage (28, 28').

9. Tête à rouler des filets tangentielle selon une des revendications précédentes, **caractérisée en ce que** au moins deux extrémités opposées l'une de l'autre des griffes (134, 134') des galets de filetage (128, 128') se trouvent sur les jambes d'un angle aigu (145, 145').

10. Tête à rouler des filets tangentielle selon la revendication 9, **caractérisée en ce que** l'angle aigu (145, 145') est différent pour les deux galets de filetage (128, 128').

11. Tête à rouler des filets tangentielle selon une des revendications précédentes, **caractérisée en ce que** les griffes (34, 34', 36, 36', 134, 134') des galets de filetage (28, 28', 128, 128') forment chacune au moins une surface de butée (147, 147'), les surfaces de butée (147, 147') chacune faisant butée sur les griffes (44, 44', 46, 46', 144, 144', 146, 146') des pignons associés (38, 38', 138, 138') dans la position de montage.

12. Tête à rouler des filets tangentielle selon la revendication 11, **caractérisée en ce que** les surfaces de butée (147, 147') ont un déroulement courbé.

13. Tête à rouler des filets tangentielle selon une des revendications 11 ou 12, **caractérisée en ce que** chacune des surfaces de butée (147, 147') est formée par une section de butée (139, 139') qui relie deux sections de griffe opposées l'une de l'autre (135, 135', 137, 137) des galets de filetage (128, 128').

14. Tête à rouler des filets tangentielle selon la revendication 13, **caractérisée en ce que** chacune des sections de butée (139, 139') a une épaisseur plus petite que les sections de griffe opposées l'une de l'autre (135, 135', 137, 137), de sorte qu'un logement (141, 141') limité par la surface de butée (147, 147') pour une griffe (144, 144', 146, 146') conçue en forme complémentaire du pignon associe (138, 138') est formé entre les sections de griffe (135, 135', 137, 137) opposées l'une de l'autre.

15. Tête à rouler des filets tangentielle selon la revendication 14, **caractérisée en ce que** les logements (141, 141') des deux galets de filetage (128, 128') ont des largeurs différentes.

16. Tête à rouler des filets tangentielle selon une des revendications précédentes, comportant en outre un support de la tête à rouler, sur lequel les bras de tête à rouler (12', 14') sont logés à pouvoir pivoter autour d'un arbre commun (24') parallèle aux arbres des galets, aussi bien que des moyens d'ajustement pour ajuster la position de pivotement des bras de tête à rouler (12', 14') sur le support de la tête à rouler.
